# EUROPÄISCHE PATENTANMELDUNG

(11) **EP 3 988 393 A1**
(43) Veröffentlichungstag der Anmeldung: **27.04.2022**
(21) Anmeldenummer: 21204351.7
(22) Anmeldetag: 22.10.2021
(51) Int. Cl.: B60Q 3/40, B60Q 3/74, B60Q 3/80

(54) **FREIZEITFAHRZEUG MIT EINER VON EINER TAGESZEIT ABHÄNGIGEN BELEUCHTUNG FÜR EINEN RAUM UND STEUERUNGSVERFAHREN FÜR SOLCH EINE BELEUCHTUNG**

(30) Priorität: 22.10.2020 DE 102020127904
(71) Anmelder: Erwin Hymer Group SE, 88339 Bad Waldsee (DE)
(72) Erfinder: Dr. Freimann, Rüdiger, 88436 Eberhardzell (DE); Notz, Andreas, 87439 Kempten (DE); Stickelmann, Calvin, 88427 Bad Schussenried (DE); von Terzi, Stefan, 81547 München (DE)
(74) Vertreter: Waller, Stefan

(57) **Zusammenfassung**

Freizeitfahrzeug (1), insbesondere Wohnmobil oder Wohnwagen, mit zumindest einem Raum (2, 3, 4) und zumindest einer Beleuchtung (5, 6, 7) für den zumindest einen Raum (2, 3, 4). Vorgeschlagen wird, dass eine Steuerung (8) für die zumindest eine Beleuchtung (5, 6, 7) vorgesehen ist und dass die Steuerung (8) so ausgebildet ist, dass zumindest in Abhängigkeit von einer Tageszeit (9) zumindest eine Kenngröße der Beleuchtung (5, 6, 7) entsprechend einem Verlauf dieser zumindest einen Kenngröße bei einem natürlichen Tageslicht steuerbar ist. Ferner ist ein Steuerungsverfahren für solch ein Freizeitfahrzeug (1) angegeben.

## Beschreibung

Die Erfindung betrifft ein Freizeitfahrzeug nach dem Oberbegriff des Patentanspruchs 1.

Unter einem Freizeitfahrzeug wird vorliegend ein Fahrzeug verstanden, dass zumindest mithilfe von in diesem montierbaren Einrichtungen und Möbeln dem Nutzer eine Möglichkeit zum Schlafen und Wohnen in diesem Fahrzeug bietet. Für eine anderweitige Verwendung, wenn das Fahrzeug nicht als Freizeitfahrzeug zum Campen benutzt wird, können diese Einrichtungen und Möbel zumindest zum Teil ohne großen Aufwand entfernt werden. Weiterhin umfasst der Begriff auch alle Campingfahrzeuge wie Wohnmobile und Wohnwagen, wobei eine Motorisierung der Fahrzeuge nicht zwingend erforderlich ist und ein Freizeitfahrzeug insbesondere auch einen Anhänger umfasst. Solche Freizeitfahrzeuge zeichnen sich durch einen größeren Wohnaufbau aus, wobei in der überwiegenden Anzahl der Fälle nicht die Originalkarosserie beispielsweise eines Kleintransporters zum Einsatz kommt, sondern ein größerer Aufbau von dem Hersteller des Freizeitfahrzeugs auf einem Chassis aufgebaute wird. Bei einem Wohnanhänger als Freizeitfahrzeug wird regelmäßig ein Anhängerchassis genutzt, auf dem ein Wohnaufbau speziell aufgebaut wird.

Aus der DE 94 13 014.0 U1 ist ein Wohnmobil mit einem Fenster und einem dem Fenster zugeordneten Rollo bekannt. Hierbei ist hinter der Rollo-Abdeckung eine Leuchte angeordnet, die ohnehin vorhandene künstliche Lichtquellen beziehungsweise den natürlichen Lichteinfall durch eine angenehme, indirekte Beleuchtung ergänzt. Die Leuchte besteht vorzugsweise aus einer Leuchtstoffröhre.

Bei dem aus der DE 94 13 014.0 U1 bekannten Wohnmobil besteht der Nachteil, dass die Leuchtstoffröhre nur eine nicht dimmbare und somit insbesondere in ihrem Lichtstrom vorgegebene zusätzliche Beleuchtung schafft, die zwar an oder ausgeschaltet werden kann, dann aber von Benutzern subjektiv als zu warm oder zu kalt sowie als zu hell oder zu schwach leuchtend empfunden werden kann.

Beispielsweise werden Leuchtmittel als warmweiß, neutralweiß und tageslichtweiß angeboten. Eine Leuchtstoffröhre vom Typ Warmweiß passt dann am Tag subjektiv nicht zum einfallenden Tageslicht. Eine Leuchtstoffrohre vom Typ Tageslichtweiß wirk anregend und hat deshalb am Abend die Wirkung, dass Personen unter dem Einfluss dieses Lichts tendenziell wach gehalten werden.

Aufgabe der Erfindung ist es, ein Freizeitfahrzeug und ein Steuerungsverfahren für ein Freizeitfahrzeug anzugeben, die verbessert ausgebildet sind und insbesondere eine dem Menschen angepasste und sein Wohlempfinden verbessernde Beleuchtung ermöglichen.

Diese Aufgabe wird durch ein Freizeitfahrzeug mit den Merkmalen des unabhängigen Patentanspruchs 1 und ein Steuerungsverfahren mit den Merkmalen des Patentanspruchs 9 gelöst. Vorteilhafte Weiterbildungen der Erfindung sind in den Unteransprüchen angegeben.

Die Aufgabe wird durch ein Freizeitfahrzeug, insbesondere ein Wohnmobil oder einen Wohnwagen, mit zumindest einem Raum und zumindest einer Beleuchtung für den zumindest einen Raum gelöst, wobei eine Steuerung für die zumindest eine Beleuchtung vorgesehen ist und wobei die Steuerung so ausgebildet ist, dass zumindest in Abhängigkeit von einer Tageszeit zumindest eine Kenngröße der Beleuchtung entsprechend einem Verlauf dieser zumindest einen Kenngröße bei einem natürlichen Tageslicht steuerbar ist.

Ferner wird die Aufgabe durch ein Steuerungsverfahren für ein Freizeitfahrzeug, insbesondere ein Wohnmobil oder einen Wohnwagen, welches Freizeitfahrzeug zumindest einen Raum und zumindest eine Beleuchtung für den zumindest einen Raum aufweist, gelöst, wobei zumindest in Abhängigkeit von einer Tageszeit zumindest eine Kenngröße der Beleuchtung entsprechend einem Verlauf dieser zumindest einen Kenngröße bei einem natürlichen Tageslicht gesteuert wird.

Lichtstimmungen im Fahrzeuginnenraum können durch farbvariable Leuchtmittel erzeugt werden. Der Farbton kann von Variablen wie Außenlicht, Fahrzustand, Fahrerzustand o.ä. abhängig sein. Eine einfachere Variante ist die Wahl des Farbtons durch den Fahrer aus einer begrenzten Anzahl vordefinierter Farbtöne.

Die menschliche Psyche und Leistungsfähigkeit und die Fähigkeit zur Regeneration in den Erholungs- und Schlafphasen wird wesentlich durch den zirkadianen Lichtverlauf des Tageslichts und die damit einhergehende farbtemperaturabhängige Steuerung des menschlichen Melatoninspiegels beeinflusst. Das Tageslicht entsprechend Sonnenaufgang, Mittag und Sonnenuntergang ist einer der stärksten Impulsgeber für die innere Uhr und den Biorhythmus des Menschen. Eine vom zirkadianen Lichtverlauf entkoppelte statische Beleuchtung in Innenräumen z.B. mit Kunstlicht, wie LED- oder Neonbeleuchtung, mit hoher Farbtemperatur wirkt sich bei dauerhafter Exposition negativ auf die Psyche, Schlafqualität, Leistungsfähigkeit und die Regeneration aus. Die Folge können Fettleibigkeit, Depressionen, saisonale affektive Störungen (SAD), Herz-Kreislauf-Erkrankungen oder zirkadiane Schlaf-Wach-Rhythmusstörungen (SCRD) sein.

Die geografische und jahreszeitliche Abhängigkeit von Sonnenauf- und -untergang bzw. des höchsten Sonnenstandes wirken sich auf das durch die Atmosphäre propagierte Lichtspektrum aus. Durch die Tageszeit- und Tageslicht-synchrone Steuerung des Kunstlichts (Helligkeit, Farbtemperatur) im Innenraum von Wohnmobilen wird vorzugsweise sichergestellt, dass die biologische Uhr von Nutzern, die sich längere Zeit im Wohnwagen oder Wohnmobil aufhalten, die richtigen Impulse für Ruhe und Aktivitätsphasen erhält. Anwendungen und Programme, die auf den zirkadianen Rhythmus und Nutzertyp angepasst werden können, steuern dabei nach Aktivierung automatisch die je nach Tages- und Nachtzeit richtige und gesunde Lichtmenge und Farbtemperatur in allen Wohnbereichen (Schlafzimmer, Bad, Küche, Wohnraum). Dabei werden die Bedürfnisse von "Lerchen" (Frühaufsteher) und "Eulen" (Spätaufsteher) vorzugsweise durch entsprechende Voreinstellungen (Presets) und Einstellmöglichkeiten unterschiedlich berücksichtigt. Diese Einstellmöglihckeiten umfassen vorzugsweise auch die Kompensation des Tageslichtunterschiedes anhand der Kriterien, Jahreszeit, Uhrzeit, Heimatort (Längen- und Breitengrad) und andere.

Je nach Ausgestaltung können folgende Vorteile realisiert werden. Es kann eine Orts-und Zeit-abhängige Simulation des Tageslichts im Fahrzeuginneren bzw. ein bio-und/oder geoaktives Licht ermöglicht werden. Neue Nutzungskonzepte sind für die bekannten Grundrisse möglich, wie ein Homeoffice, das hinsichtlich der Beleuchtung mit dem Ort der Arbeit sychronisiert ist.

Zusätzliche Funktionen können bei gleicher Ausstattung realisiert werden, wie beispielsweise ein Vorbereiten auf eine Nachtfahrt. Zur Realisierung kann gegebenenfalls im Wesentlichen nur eine Softwareentwicklung, aber keine zusätzliche Hardware nötig sein, so dass sich speziell bei vorhandener SCU wesentliche Herstellungsvorteile und die Möglichkeit zur Realisierung bei bestehenden Konzepten ergibt. Gegebenenfalls kein eine Erhöhung des Marktanteils ermöglicht werden. Eine Jetlag-Funktion kann u.a. im Vermietmarkt die Nachfrage an Neufahrzeugen in den Mietflotten erhöhen.

Durch die Tageszeit- und Tageslicht-synchrone Steuerung des Kunstlichts, insbesondere in Bezug auf Helligkeit (Lichtstrom) und Farbtemperatur, kann im Innenraum von Wohnmobilen sichergestellt werden, dass die biologische Uhr des Menschen die richtigen Impulse für Ruhe und Aktivitätsphasen erhält. Das Ergebnis sind ein gesunder Schlaf mit längeren Tiefschlafphasen, eine bessere Regeneration und eine höhere Leistungsfähigkeit. Durch die automatische Steuerung der Lichtqualität wird z.B. mit einer Farbtemperatur unter 3.000 Kelvin in den Abendstunden, insbesondere den Stunden zwischen 18 Uhr und 24 Uhr und/oder den Stunden nach Sonnenuntergang, verhindert, dass eine Exposition mit blauem Licht die Ausschüttung des Schlafhormons Melatonin blockiert. Die Badezimmerbeleuchtung wird vorzugsweise synchron gesteuert: Die Farbtemperatur wird am Abend unter 3.000 Kelvin und am Morgen über 4.000 Kelvin vorgegeben. Mit Hilfe dieser ideal programmierten zirkadianen Lichtsteuerung im Innenraum können erstmals auch Nutzer in Regionen und Jahreszeiten mit geringem Tageslichtanteil, wie in Skandinavien, tagsüber mit gesundem und bioaktiven Licht versorgt werden. Dies hat direkt Auswirkungen auf die menschliche Psyche, insbesondere die Leistungsfähigkeit, die Gehirntätigkeit und das Wohlbefinden.

Wenn die Steuerung auf verschiedene geografische Punkte programmierbar (einstellbar) ist, dann kann auch ein Jetlag bereits vor Abreise vorgebeugt und/oder abgeschwächt werden. Ferner können anwendungsspezifische Lichtszenarien vorgeben sein, wie Arbeitslicht, Schminklicht, Küchenlicht, Leselicht, etc. Einstellung des Tagesrhythmus auf noch zu erledigende Tätigkeiten, wie eine Vorbereitung auf eine Nachtfahrt durch aktive Verlängerung der Blau-Phase und eine Unterstützung von Powernapping (kurzem Erholungsschlaf) durch entsprechende Lichtstimmung, sind ebenfalls möglich.

Vorteilhaft ist es, dass eine Kenngröße der Beleuchtung ein Lichtstrom der Beleuchtung ist und dass die Steuerung so ausgebildet ist, dass der Lichtstrom der Beleuchtung ansteigt, wenn der Lichtstrom eines natürlichen Tageslichts ansteigt, und abfällt, wenn der Lichtstrom eines natürlichen Tageslichts abfällt. Somit ist die beschriebene positive Beeinflussung möglich.

Vorteilhaft ist es, dass eine Kenngröße eine Farbtemperatur der Beleuchtung ist. Dadurch kann insbesondere ein vorteilhafter Einfluss auf den Schlaf-Wach-Rhythmus der Benutzer des Freizeitfahrzeugs erzeugt werden.

Vorteilhaft ist es, dass die Steuerung so ausgebildet ist, dass eine Farbtemperatur der Beleuchtung in gewissen Abendstunden unter 3000 K gesteuert ist und/oder dass eine Farbtemperatur der Beleuchtung, insbesondere der Beleuchtung in einem Raum einer Sanitärzelle, in gewissen Morgenstunden über 4000 K gesteuert ist. Dies ermöglicht insbesondere morgens und abends eine Beeinflussung des Schlaf-Wach-Rhythmus. Dadurch erhält die innere Uhr des Menschen morgens ein stärkeres Signal als es sonst in einem Innenraum der Fall ist, dass der Tag angebrochen ist, und abends wird ein künstliches Signal, das der inneren Uhr des Menschen fälschlich anzeigt, dass der Abend noch nicht angebrochen sei, vermieden. Dadurch kann die innere Uhr des Menschen tendenziell wieder in Takt mit dem Tagesrhythmus gebracht werden.

Vorteilhaft ist es, dass die Steuerung so ausgebildet ist, dass der Verlauf des natürlichen Tageslichts, entsprechend dem die Beleuchtung steuerbar ist, zumindest entsprechend dem Verlauf für den momentanen Aufenthaltsort wählbar ist. Dadurch ergibt sich aus der Kombination der Einflüsse im und außerhalb des Freizeitfahrzeugs eine besonders vorteilhafter Gesamteinfluss auf den menschlichen Organismus.

Vorteilhaft ist es, dass die Steuerung so ausgebildet ist, dass der Verlauf des natürlichen Tageslichts, entsprechend dem die Beleuchtung steuerbar ist, aus mehreren Verläufen für verschiedene Höhengrade und/oder Breitengrade wählbar ist. Hierdurch kann beispielsweise in sehr nördlichen Breitengraden das Wohlbefinden gesteigert werden. Insbesondere für Menschen, die in nördlichen Breitengraden mit dem Freizeitfahrzeug Urlaub machen, aber in südlicheren Breitengraden arbeiten, kann dadurch das Urlaubserlebnis deutlich verbessert werden.

Vorteilhaft ist es, dass die Steuerung so ausgebildet ist, dass Höhengrade und Breitengrade durch die Auswahl eines bestimmten Ortes, insbesondere einer Stadt, aus mehreren Orten, insbesondere Städten, auswählbar sind. Dadurch kann unter anderem auch gezielt eine von den örtlichen Gegebenheiten abweichende Verlaufskurve für die Beleuchtung gewählt werden. Die Auswahl kann hierbei intuitiv erfolgen.

Vorteilhaft ist es, dass die Steuerung so ausgebildet ist, dass zumindest eine Kenngröße zumindest einer Beleuchtung zusätzlich entsprechend einem von einem Benutzer auswählbaren Lichtszenario steuerbar ist. Hierdurch kann insbesondere eine Beleuchtung zum Arbeiten, zum Schminken, zum Kochen und zum Lesen realisiert werden.

Weitere Vorteile und Einzelheiten der Erfindung werden anhand des in der schematischen Figur dargestellten Ausführungsbeispiels näher erläutert.

Es zeigen:
- Fig. 1: ein Freizeitfahrzeug in einer schematischen Darstellung entsprechend einem Ausführungsbeispiel der Erfindung und
- Fig. 2: einen Tagesrhythmus zur Veranschaulichung möglicher Verläufe eines Tageslichts.

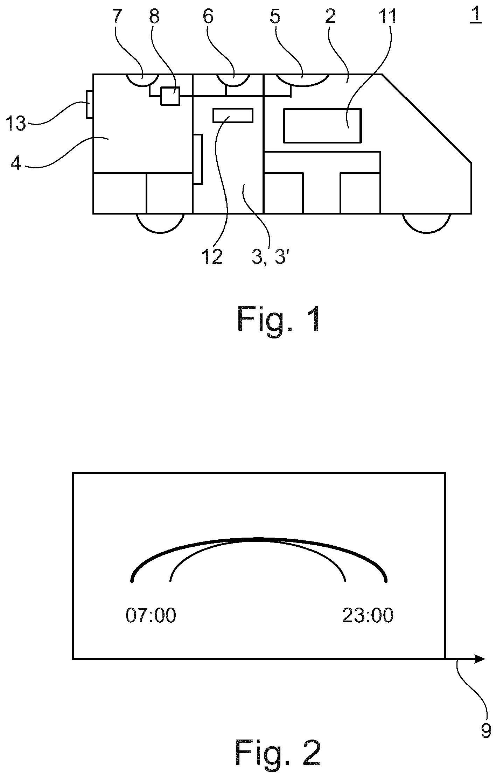

Fig. 1 zeigt ein Freizeitfahrzeug 1 in einer schematischen Darstellung entsprechend einem Ausführungsbeispiel der Erfindung. Das Freizeitfahrzeug 1 kann insbesondere als Wohnmobil oder Wohnwagen ausgebildet sein.

Das Freizeitfahrzeug 1 umfasst Räume 2, 3, 4. Der Raum 2 ist hierbei ein Wohnraum 2. Der Raum 3 ist der Raum einer Sanitärzelle 3'. Der Raum 4 dient zum Schlafen. Für die Räume 2, 3, 4 sind Beleuchtungen 5, 6, 7 vorgesehen.

Außerdem weist das Freizeitfahrzeug 1 eine Steuerung 8 auf. Die Steuerung 8 dient zum Steuern der Beleuchtungen 5, 6, 7.

Fig. 2 zeigt einen Tagesrhythmus zur Veranschaulichung möglicher Verläufe eines Tageslichts. Die Steuerung 8 ist so ausgebildet, dass in Abhängigkeit von einer Tageszeit 9 zumindest eine Kenngröße der jeweiligen Beleuchtung 5, 6, 7 entsprechend einem Verlauf dieser Kenngröße bei einem natürlichen Tageslicht gesteuert wird. Der Verlauf bei dem natürlichen Tageslicht, muss hierbei nicht notwendigerweise der Verlauf des Tageslichts am momentanen Aufenthaltsort des Freizeitfahrzeugs 1 sein.

Die Kenngröße der jeweiligen Beleuchtung 5, 6, 7 kann ein Lichtstrom der Beleuchtung 5, 6, 7 sein. Dadurch wird die Helligkeit gesteuert. Entsprechend einem möglichen Verlauf des Tageslichts entsprechend den Darstellungen in Fig. 1 kann von 7 Uhr bis 15 Uhr örtlicher Zeit eine Zunahme des Lichtstroms und dann von 15 Uhr bis 23 Uhr örtlicher Zeit eine Abnahme des Lichtstroms erfolgen. Hierbei kann der Maximalwert um 15 Uhr örtlicher Zeit, also in der Zeitzone am Aufenthaltsort des Freizeitfahrzeugs 1, erreicht werden.

Dadurch ist die Steuerung 8 dann so ausgebildet ist, dass im Rahmen der Ansteuerung der Beleuchtungen 5, 6, 7 mittels des Steuerungsverfahrens der Lichtstrom der jeweiligen Beleuchtung 5, 6, 7 ansteigt, wenn der Lichtstrom eines natürlichen Tageslichts ansteigt, und abfällt, wenn der Lichtstrom eines natürlichen Tageslichts abfällt. Dies schließt nicht aus, dass ein Benutzer zusätzlich eingreifen kann. Insbesondere kann ein Benutzer die Beleuchtungen 5, 6, 7 jeweils ausschalten, wenn er den jeweiligen Raum 2, 3, 4 gerade nicht nutzen möchte.

Bei einer bevorzugten Ausgestaltung ist die Kenngröße der jeweiligen Beleuchtung 5, 6, 7, deren Verlauf über den Tag gesteuert wird, die Farbtemperatur der jeweiligen Beleuchtung 5, 6, 7. Hierfür sind die Beleuchtungen 5, 6, 7 so realisiert, dass eine Veränderung der Farbtemperatur innerhalb des erforderlichen Bereichs ermöglicht ist.

Die Steuerung 8 kann dann die Farbtemperatur der Beleuchtungen 5, 6, 7 in gewissen Abendstunden unter 3000 K steuern. Dann wird abends ein wärmeres Licht mit weniger Blauanteilen abgestrahlt. Dies fördert einen Übergang zur Schlafphase des Menschen. Andererseits kann die Farbtemperatur der Beleuchtungen 5, 6, 7 morgens über 4000 K gesteuert werden. Dies betrifft beispielsweise die Beleuchtung 6 in der Sanitärzelle 3', die dann dem Benutzer einen anregenden Impuls gibt.

Das Freizeitfahrzeug 1 kann mehrere Lichteinlässe 11, 12, 13 aufweisen, die insbesondere durch Fenster oder transparente Dachluken realisiert sein können. Exemplarisch sind die Lichteinlässe 11, 12, 13 hier als Fenster veranschaulicht. Die Beleuchtungen 5, 6, 7 können dadurch den natürlichen Lichteinfall ergänzen. Hierbei wird vorzugsweise eine mit dem Tageslicht zumindest vergleichbare Farbtemperatur für die Beleuchtungen 5, 6, 7 über den Tagesverlauf variabel eingestellt. Dann ist der Verlauf des natürlichen Tageslichts, entsprechend dem die Beleuchtungen 5, 6, 7 angesteuert werden, gleich dem Verlauf für den momentanen Aufenthaltsort gewählt.

Ferner ist es möglich, dass der Verlauf des natürlichen Tageslichts, entsprechend dem die Beleuchtungen 5, 6, 7 angesteuert werden, von einem Benutzer aus mehreren Verläufen für verschiedene Höhengrade und Breitengrade wählbar ist. Eine komfortable Möglichkeit, die Höhengrade und Breitengrade jeweils einzustellen, besteht in der Auswahl eines bestimmten Ortes aus mehreren Orten. So kann ein Benutzer beispielsweise seine Heimatstadt auswählen, um am Ende seines Urlaubs eine Umstellung auf die Bedingungen an seinem Heimatort zu unterstützen. Dann kann ein Jetlag bei seiner Rückkehr gemindert oder vermieden werden.

Zusätzlich können auch Lichtszenarien vorgesehen sein, aus denen eine Auswahl getroffen werden kann. So kann beispielsweise am Vortag einer Nachtfahrt bereits eine aktive Verlängerung der Blauphase der Beleuchtungen 5, 6, 7 eingestellt werden. Zur Unterstützung eines kurzen Erholungsschlafs kann eine entsprechende Lichtstimmung ausgewählt werden.

Die Erfindung ist nicht auf die beschriebenen Ausführungsformen beschränkt.

## Patentansprüche

1. Freizeitfahrzeug (1), insbesondere Wohnmobil oder Wohnwagen, mit zumindest einem Raum (2, 3, 4) und zumindest einer Beleuchtung (5, 6, 7) für den zumindest einen Raum (2, 3, 4),
**dadurch gekennzeichnet,**
**dass** eine Steuerung (8) für die zumindest eine Beleuchtung (5, 6, 7) vorgesehen ist und dass die Steuerung (8) so ausgebildet ist, dass zumindest in Abhängigkeit von einer Tageszeit (9) zumindest eine Kenngröße der Beleuchtung (5, 6, 7) entsprechend einem Verlauf dieser zumindest einen Kenngröße bei einem natürlichen Tageslicht steuerbar ist.

2. Freizeitfahrzeug nach Anspruch 1,
**dadurch gekennzeichnet,**
**dass** eine Kenngröße der Beleuchtung (5, 6, 7) ein Lichtstrom der Beleuchtung (5, 6, 7) ist und dass die Steuerung (8) so ausgebildet ist, dass der Lichtstrom der Beleuchtung (5, 6, 7) ansteigt, wenn der Lichtstrom eines natürlichen Tageslichts ansteigt, und abfällt, wenn der Lichtstrom eines natürlichen Tageslichts abfällt.

3. Freizeitfahrzeug nach Anspruch 1 oder 2,
**dadurch gekennzeichnet,**
**dass** eine Kenngröße eine Farbtemperatur der Beleuchtung (5, 6, 7).

4. Freizeitfahrzeug nach Anspruch 3,
**dadurch gekennzeichnet,**
**dass** die Steuerung (8) so ausgebildet ist, dass eine Farbtemperatur der Beleuchtung (5, 6, 7) in gewissen Abendstunden unter 3000 K gesteuert ist und/oder dass eine Farbtemperatur der Beleuchtung (5, 6, 7), insbesondere der Beleuchtung (5, 6, 7) in einem Raum (3) einer Sanitärzelle (3'), in gewissen Morgenstunden über 4000 K gesteuert ist.

5. Freizeitfahrzeug nach einem der Ansprüche 1 bis 4,
**dadurch gekennzeichnet,**
**dass** die Steuerung (8) so ausgebildet ist, dass der Verlauf des natürlichen Tageslichts, entsprechend dem die Beleuchtung (5, 6, 7) steuerbar ist, zumindest entsprechend dem Verlauf für den momentanen Aufenthaltsort wählbar ist.

6. Freizeitfahrzeug nach einem der Ansprüche 1 bis 5,
**dadurch gekennzeichnet,**
**dass** die Steuerung (8) so ausgebildet ist, dass der Verlauf des natürlichen Tageslichts, entsprechend dem die Beleuchtung (5, 6, 7) steuerbar ist, aus mehreren Verläufen für verschiedene Höhengrade und/oder Breitengrade wählbar ist.

7. Freizeitfahrzeug nach einem der Ansprüche 1 bis 6,
**dadurch gekennzeichnet,**
**dass** die Steuerung (8) so ausgebildet ist, dass Höhengrade und Breitengrade durch die Auswahl eines bestimmten Ortes, insbesondere einer Stadt, aus mehreren Orten, insbesondere Städten, auswählbar sind.

8. Freizeitfahrzeug nach einem der Ansprüche 1 bis 7,
**dadurch gekennzeichnet,**
**dass** die Steuerung (8) so ausgebildet ist, dass zumindest eine Kenngröße zumindest einer Beleuchtung (5, 6, 7) zusätzlich entsprechend einem von einem Benutzer auswählbaren Lichtszenario steuerbar ist.

9. Steuerungsverfahren für ein Freizeitfahrzeug (1), insbesondere ein Wohnmobil oder einen Wohnwagen, welches Freizeitfahrzeug (1) zumindest einen Raum (2, 3, 4) und zumindest eine Beleuchtung (5, 6, 7) für den zumindest einen Raum (2, 3, 4) aufweist,
**dadurch gekennzeichnet,**
**dass** zumindest in Abhängigkeit von einer Tageszeit zumindest eine Kenngröße der Beleuchtung (5, 6, 7) entsprechend einem Verlauf dieser zumindest einen Kenngröße bei einem natürlichen Tageslicht gesteuert wird.
